# EUROPÄISCHE PATENTANMELDUNG

(11) **EP 2 955 543 A1**
(43) Veröffentlichungstag der Anmeldung: **16.12.2015**
(21) Anmeldenummer: 14172034.2
(22) Anmeldetag: 11.06.2014
(51) Int. Cl.: G01S 17/74, G01S 7/481, G01S 7/497

(54) **Prüfvorrichtung, Prüfanordnung und Verfahren zum Testen eines optischen Abstands- und Geschwindigkeitsmessers**

(71) Anmelder: VITRONIC Dr.-Ing. Stein Bildverarbeitungssysteme GmbH, 65189 Wiesbaden (DE)
(72) Erfinder: Hoffmann, Burghard, 65232 Taunusstein (DE); Scherer, Frank, 64297 Darmstadt (DE); Yalda, Jan, 65385 Rüdesheim am Rhein (DE); Baumbach, Frank, 55122 Mainz (DE)
(74) Vertreter: Neumann Müller Oberwalleney & Partner Patentanwälte

(57) **Zusammenfassung**

Die Erfindung betrifft eine Prüfvorrichtung 1 zum Testen eines optischen Abstands- und Geschwindigkeitsmessers (LiDAR), welche einen Empfänger 4, der dazu bestimmt ist, von einem Prüfling 2 ausgestrahlte Lichtimpulse zu detektieren und diese in die Lichtimpulse repräsentierende elektronische Eingangssignale umzuwandeln, aufweist. Ferner ist ein mit dem Empfänger 4 verbundener Verzögerungsgenerator 10 vorgesehen, der dazu bestimmt ist, zu den Eingangssignalen zeitverzögerte elektronische Ausgangssignale zu generieren. Darüber hinaus ist ein mit dem Verzögerungsgenerator 10 verbundener und mittels der Ausgangssignale gesteuerter Sender 5 vorgesehen, der dazu bestimmt ist, Lichtimpulse in Richtung des Prüflings 2 auszusenden. Vor dem Empfänger 4 ist ein erstes optisches Auskopplungselement 16 zum Auskoppeln eines Teils des Lichtimpulses von dem Prüfling 2 zu einer Kalibriereinrichtung 15 vorgesehen. Des Weiteren ist vor dem Sender 5 ein zweites optisches Auskopplungselement 18 zum Auskoppeln eines Teils des Lichtimpulses von dem Sender 5 zu der Kalibriereinrichtung 15 vorgesehen.

## Beschreibung

Die Erfindung betrifft eine Prüfvorrichtung zum Testen eines optischen Abstands-und Geschwindigkeitsmessers (LiDAR, Light detection and ranging). Geschwindigkeitsüberwachungsgeräte sind in unterschiedlichen Bauarten bekannt. Unter anderem werden Laserhandmessgeräte und Laserscanner-Geschwindigkeitsmessgeräte zur Geschwindigkeitsmessung eingesetzt. Zudem gibt es Laserhandmessgeräte, die nur dazu bestimmt sind, die Entfernung zu einem Objekt zu bestimmen. Diese Geräte arbeiten nach dem "Time-of-Flight"-Prinzip. Bei dieser Messung wird die Zeitdauer gemessen, die zwischen dem Aussenden des Licht(Laser)-Impuls bis zum Empfangen der zurückgesendeten Strahlen vergeht. Diese Zeit ist dabei proportional zur Entfernung zwischen Messsystem und detektiertem Objekt. Um die Geschwindigkeit eines Objektes zu messen, wird die Abstandsmessung aufeinanderfolgender Licht(Laser)-Impulse zugrunde gelegt. Laserscanner können jedoch auch dafür eingesetzt werden, Fahrzeuge zu verfolgen. Sie dienen in diesem Fall nicht der unmittelbaren Geschwindigkeitsmessung. Laserscanner fächern den Bereich, in dem der Laser ausgesandt wird, auf, so dass sich eine Messebene ergibt. Dies kann z.B. über einen bewegbaren Spiegel erfolgen.

Aus der EP 2 204 788 A1 und aus der DE 101 48 289 A1 sind beispielsweise scannende Systeme bekannt, bei denen ein Sensorsystem mit einem flächenüberwachenden Lasermesssensor verwendet wird, wobei der Lasermesssensor eine fächerförmige Messebene aufspannt, die in etwa entlang der Fahrbahnrichtung mit der Fahrbahn eine Schnittlinie bildet. Die Messebene ist zudem zur Fahrbahnebene geneigt. Hierdurch kann ein Fahrzeug nach Eintritt in die vom Lasermesssensor gebildete Messebene verfolgt werden, bis das Fahrzeug wieder aus der Messebene austritt. Hierbei bewegt sich das Fahrzeug kontinuierlich in der Messebene, so dass auf Basis der ermittelten Messdaten die Position, die Geschwindigkeit und die Geometrie des Fahrzeugs abgeschätzt werden kann. Nach Austritt aus der Messebene durchfährt das Fahrzeug ein Portal, an dem neben dem erstgenannten Lasermesssensor ein weiterer Lasermesssensor vorgesehen ist, der eine Messebene quer zur Fahrbahnrichtung aufspannt, wobei die Messebene vertikal in etwa senkrecht zur Fahrbahn ausgerichtet ist. Dieser Lasermesssensor erfasst dann die genaue Kontur des Fahrzeugs, um dieses klassifizieren zu können und um zum Beispiel mautpflichtige Fahrzeuge von nicht mautpflichtigen Fahrzeugen unterscheiden zu können.

Aus der EP 0 601 872 B1 ist ein Testgerät für Laser-Entfernungsmesser bekannt, das eine Laser-Entfernungssimulation bereitstellt. Das Testgerät weist ein Entfernungs-Simulationstestsystem auf, das eine reale Laser-Entfernungstestanlage in einer relativ kleinen Baugruppe simuliert. Insbesondere ist das System ein computergesteuerter, elektronischer Laserentfernungssimulator, der verwendet wird, um Laser-Entfernungsmesser zu testen beziehungsweise zu prüfen. Das Entfernungs-Simulationstestsystem misst die Ausgangsenergie eines zu testenden Laser-Entfernungsmessers. Es benutzt dann den gemessenen Energiewert in Verbindung mit den computersimulierten Modifizierfaktoren, die die Rundreisezeit des Lichtimpulses zum Ziel, atmosphärische Effekte (Transmission, Streuung und Absorption) und die simulierte Zielreflektivität repräsentieren, um die Verzögerungszeit und das Ausgangsenergieniveau seines internen Lasersenders auf das spezifische Energieniveau einzustellen, das benötigt wird, um das reflektierte Signal zu simulieren, das der Laser-Entfernungsmesser empfangen würde, falls er unter denselben Bedingungen auf ein reales Ziel einen Laserimpuls ausgesandt hätte.

Für alle genannten Vorrichtungen und Verfahren ist erforderlich, dass der Abstand sehr genau gemessen werden kann. Es ist daher erforderlich, die Messgeräte zu kalibrieren. Unter Kalibrieren versteht man das Feststellen und Dokumentieren der Abweichung der Anzeige eines Messgerätes von einem Normal der Messgröße. Beim Kalibrieren eines Messgerätes wird unter vorgegebenen Bedingungen der Zusammenhang zwischen Eingangs- und Ausgangsgröße ermittelt und dokumentiert. Eingangsgröße ist die zu messende physikalische Größe - z. B. die Zeitdifferenz zwischen zwei ausgesandten und wieder empfangenen Licht(Laser)-Impulsen. Ausgangsgröße kann das elektrische Ausgangssignal des Messgeräts sein.

Ein Testsystem mit Kalibriereinrichtung für Laserhandmessgeräte für die Geschwindigkeitsmessung ist in dem technischen Handbuch der National Highway Traffic Safety Administration: Speed-Measuring Device Performance Specifications: Lidar Module, Washington, DC, USA, 2004 beschrieben. Das Testsystem weist einen Empfänger auf, der dazu bestimmt ist, von einem Prüfling, hier dem Laserhandmessgerät, ausgestrahlte Lichtimpulse zu detektieren und diese in die Lichtimpulse repräsentierende elektronische Eingangssignale umzuwandeln. Ein mit dem Empfänger verbundener Verzögerungsgenerator ist dazu bestimmt, zu den Eingangssignalen zeitverzögerte elektronische Ausgangssignale zu generieren. Mit dem Verzögerungsgenerator ist ein mittels der Ausgangssignale gesteuerter Sender verbunden, der dazu bestimmt ist, Lichtimpulsen in Richtung des Prüflings auszusenden. Für die Übertragung der Lichtimpulse, hier Laserimpulse, zwischen dem Laserhandmessgerät und dem Testsystem sind Lichtleiterkabel vorgesehen. Um das Testsystem kalibrieren zu können, werden die elektronischen Signale ausgekoppelt.

Durch die Auskopplung der elektronischen Signale bleiben für die Kalibrierung des Testsystems Ungenauigkeiten durch einzelne elektronische Bauteile des Testsystems unberücksichtigt.

Aufgabe der vorliegenden Erfindung ist es einerseits, eine Prüfvorrichtung bereit zu stellen, die sich besser kalibrieren lässt, und andererseits ein Verfahren bereit zu stellen, bei dem ein Ziel nicht nur stationär simuliert werden kann.

Die Aufgabe wird gelöst durch eine Prüfvorrichtung zum Testen eines optischen Abstands- und Geschwindigkeitsmessers (LiDAR), welche einen Empfänger, der dazu bestimmt ist, von einem Prüfling ausgestrahlte Lichtimpulse zu detektieren und diese in die Lichtimpulse repräsentierende elektronische Eingangssignale umzuwandeln. Ferner ist ein mit dem Empfänger verbundener Verzögerungsgenerator vorgesehen, der dazu bestimmt ist, zu den Eingangssignalen zeitverzögerte elektronische Ausgangssignale zu generieren. Darüber hinaus ist ein mit dem Verzögerungsgenerator verbundener und mittels der Ausgangssignale gesteuerter Sender vorgesehen, der dazu bestimmt ist, Lichtimpulse in Richtung des Prüflings auszusenden. Vor dem Empfänger ist ein erstes optisches Auskopplungselement zum Auskoppeln eines Teils des Lichtimpulses von dem Prüfling zu einer Kalibriereinrichtung vorgesehen. Des Weiteren ist vor dem Sender ein zweites optisches Auskopplungselement zum Auskoppeln eines Teils des Lichtimpulses von dem Sender zu der Kalibriereinrichtung vorgesehen.

Vorteil bei dieser Anordnung ist, dass die Lichtimpulse für die Kalibrierung ausgekoppelt werden. Hierdurch lässt sich die Zeitdifferenz zwischen dem einfallenden Lichtimpuls vom Prüfling und dem ausgesandten Lichtimpuls der Prüfvorrichtung ermitteln, wobei die Ungenauigkeiten sämtlicher elektronischen Bauteile der Prüfvorrichtung für die Kalibrierung berücksichtigt werden können. Dies erleichtert zudem die metrologische Rückführung auf nationale Normale. Bei einer Auskopplung von elektronischen Signalen wäre aufgrund der Ungenauigkeit der elektronischen Bauteile, die nicht bei der Kalibrierung berücksichtigt würden, eine Rückführung auf nationale Normale ungleich schwerer, da deren Ungenauigkeit zu einer erhöhten Kalibrierunsicherheit führt.

Die Kalibriereinrichtung kann einen ersten Kalibrierempfänger zum Detektieren des ausgekoppelten Lichtimpulses vom Prüfling und einen zweiten Kalibrierempfänger zum Detektieren des ausgekoppelten Lichtimpulses vom Sender aufweisen. Die Kalibrierempfänger können baugleich ausgebildet sein, sie können auch baugleich zu den Empfängern der Prüfvorrichtung ausgebildet sein.

Bei der Kalibriereinrichtung handelt es sich vorzugsweise um ein Oszilloskop.

Vor dem Empfänger und/oder vor dem Sender kann ein optischer Diffusor vorgesehen sein. Dies bietet insbesondere dann Vorteile, wenn scannende LiDAR-Geräte geprüft werden sollen, bei denen der Prüfling mit einem Laserstrahl eine Messebene aufspannt. Dies geschieht in aller Regel mittels eines bewegbaren, schwenkbaren Spiegels, der den Laserstrahl ablenkt. Bei solch einem scannenden LiDAR-Gerät überstreicht der Laserstrahl den Empfänger der Prüfvorrichtung nur während einer kurzen Zeitspanne bzw. nur über einen eingeschränkten Winkelbereich, so dass nur eine geringe Anzahl an Laserimpulsen vom Empfänger der Prüfvorrichtung erfasst wird. Um die Anzahl der erfassbaren Laserimpulse zu erhöhen, kann ein optischer Diffusor vorgesehen sein, so dass vom Empfänger auch noch Lichtimpulse wahrgenommen werden können, die nicht direkt auf den Empfänger gerichtet sind, sondern geringfügig daneben ausgerichtet sind. Als Diffusor kann z.B. eine Streuscheibe oder eine Ulbricht-Kugel zum Einsatz kommen.

Der Sender weist vorzugsweise eine Laserquelle, insbesondere eine Laserdiode, auf, so dass Lasermessgeräte überprüft werden können. Der Empfänger weist entsprechend vorzugsweise eine Fotodiode auf.

Vorzugsweise ist die Empfindlichkeit des Empfängers einstellbar. Sofern der Empfänger eine Fotodiode umfasst, kann an der Fotodiode eine regelbare Spannungsquelle vorgesehen sein, über welche die Empfindlichkeit des Empfängers einstellbar ist.

Hierdurch lassen sich insbesondere dann, wenn die Prüfvorrichtung zum Testen eines scannenden LiDAR-Geräts vorgesehen ist, Fahrzeuge unterschiedlicher Größe simulieren. Bei gering eingestellter Empfindlichkeit werden nur Laserimpulse detektiert, die verhältnismäßig zentral auf den Diffusor, vorzugsweise eine Streuscheibe, treffen. Laserimpulse, die am Rand des Diffusors auftreffen, haben eine zu geringe Intensität, als dass sie noch detektiert würden. Demnach werden nur wenige Lichtimpulse über einen geringen Winkelbereich berücksichtigt, so dass ein schmales bzw. kleines Fahrzeug simuliert wird. Wird hingegen die Empfindlichkeit erhöht, können auch die am Rand des Diffusors auftreffenden Laserimpulse detektiert werden, wodurch ein breiteres bzw. größeres Fahrzeug simuliert wird.

Die Aufgabe wird zudem durch eine Prüfanordnung gelöst, die eine Prüfvorrichtung wie vorangehend erläutert, einen Prüfling sowie ein Gestell zur Aufnahme der Prüfvorrichtung und des Prüflings aufweist. Der Lichtweg zwischen dem Prüfling und der Prüfvorrichtung ist hierbei frei von optischen Elementen, so dass ein einfacher Aufbau der Prüfanordnung erzielt wird, bei der der Prüfling nur auf dem Gestell montiert werden muss, ohne noch weitere optischen Elemente zur Übertragung der Lichtimpulse montieren zu müssen.

Vorzugsweise ist vorgesehen, dass die Prüfvorrichtung und der Prüfling jeweils einen Messkopf aufweisen, die baugleiche Sender und Empfänger aufweisen. Hierdurch lassen sich die Kosten für die Prüfvorrichtung in Grenzen halten, da auf vorliegende Hardware-Komponenten zurückgegriffen werden kann.

Der Prüfling kann einen scannenden Messkopf aufweisen, wobei dann vorzugsweise ein Diffusor, wie oben erläutert, vor der Prüfvorrichtung vorgesehen sein sollte.

Vorzugsweise beträgt der Abstand zwischen dem Messkopf des Prüflings und dem Messkopf der Prüfvorrichtung 0,4 bis 2,0 m.

Die Aufgabe wird ferner durch ein Verfahren zum Testen eines optischen Abstands-und Geschwindigkeitsmessers (LiDAR) gelöst, wobei das Verfahren die folgenden Verfahrensschritte aufweist:
Detektieren von Lichtimpulsen, die von einem Prüfling ausgestrahlt werden, mittels eines Empfängers einer Prüfvorrichtung,
Generieren von die Lichtimpulse repräsentierenden elektronischen Eingangssignalen,
Generieren von zeitlich zu den Eingangssignalen verzögerten elektronischen Ausgangssignalen mittels eines mit dem Empfänger verbundenen Verzögerungsgenerators, und
Aussenden von Lichtimpulsen in Richtung zum Prüfling mittels eines mit dem Verzögerungsgenerator verbundenen und mittels der Ausgangssignale gesteuerten Senders,
wobei die Verzögerungen aufeinanderfolgender Ausgangssignale unabhängig voneinander einstellbar sind.

Hierdurch ist es möglich, die Verzögerung aufeinanderfolgender Ausgangssignale derart einzustellen und zu verändern, dass ein sich bewegendes Ziel simuliert wird.

Zum Beispiel kann die Verzögerung aufeinanderfolgender Ausgangssignale derart gesteuert werden, dass die Verzögerung stetig kleiner oder stetig größer wird. Hierdurch lässt sich ein sich an die Prüfvorrichtung annäherndes oder sich entfernendes Ziel, vorzugsweise ein Fahrzeug, simulieren. Wird die zugrunde liegende Funktion für die Steuerung der Verzögerung nichtlinear gewählt, so können beschleunigend oder verzögernd bewegte Ziele, vorzugsweise Fahrzeuge, simuliert werden.

Es ist auch möglich, Messfehler zu simulieren, bei denen zum Beispiel Sprünge in der Messgröße simuliert werden. Durch Unterbrechungen (Austastungen) des verzögerten Ausgangssignals kann auch simuliert werden, dass das zu messende Fahrzeug kurzzeitig von einem anderen Verkehrsteilnehmer oder einem sonstigen Objekt abgedeckt ist.

Vorzugsweise ist vorgesehen, dass aus dem Lichtweg zwischen dem Prüfling und der Prüfvorrichtung ein Teil des Lichtimpulses vom Prüfling optisch ausgekoppelt wird und zu einer Kalibriereinrichtung gelenkt wird und dass aus dem Lichtweg zwischen der Prüfvorrichtung und dem Prüfling ein Teil des Lichtimpulses vom Sender der Prüfvorrichtung optisch ausgekoppelt wird und zu der Kalibriereinrichtung gelenkt wird.

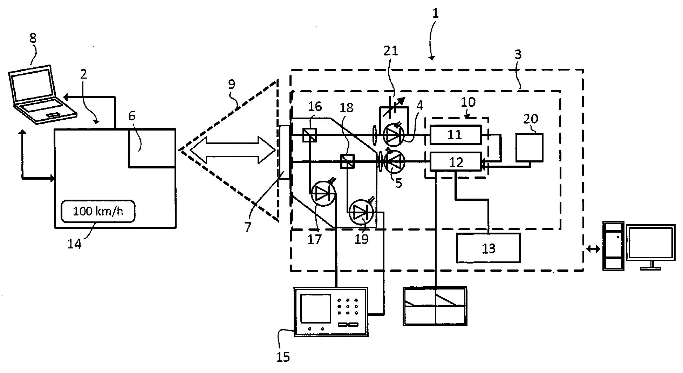

Ein bevorzugtes Ausführungsbeispiel einer erfindungsgemäßen Prüfanordnung ist in der Figur dargestellt. Die Prüfanordnung weist eine Prüfvorrichtung 1 und einen Prüfling 2, hier einen LiDAR Laserscanner, auf. Die Prüfvorrichtung 1 umfasst einen Messkopf 3, der einen Empfänger 4, hier eine Fotodiode, und einen Sender 5, hier eine Laserdiode, aufweist. Der Prüfling 2 weist ebenfalls einen Messkopf 6 auf, der ebenfalls einen Sender und einen Empfänger aufweist, die hier zur Vereinfachung nicht dargestellt sind. Vorzugsweise ist der Messkopf 3 der Prüfvorrichtung baugleich zum Messkopf 6 des Prüflings 2, wobei nur der (nicht dargestellte) Spiegel des scannenden Messkopfes 3, im Gegensatz zum Messkopf 6 des Prüflings 2, festgesetzt ist, sich also nicht bewegt.

Vor dem Empfänger 4 und dem Sender 5 der Prüfvorrichtung 1 ist ein Diffusor 7 in Form einer Streuscheibe angeordnet.

Der Prüfling 2 ist mit einem Computer 8 verbunden, um den Prüfling zu steuern. Je nach Prüfling 2 kann dieser Computer 8 jedoch auch entfallen, insbesondere wenn der Prüfling 2 eine Steuerung integriert hat. Der Prüfling 2 ist derart ausgerichtet, dass der Messkopf 6 des Prüflings 2 gegenüber vom Messkopf 3 der Prüfvorrichtung 1 angeordnet ist. Der Messkopf 6 des Prüflings 2 spannt eine Messebene 9 auf, die über einen bestimmten Winkelbereich den Diffusor 7 der Prüfvorrichtung 1 überstreicht, so dass Laserimpulse vom Empfänger 4 detektiert werden können. Die Empfindlichkeit des Empfängers 4 ist über eine regelbare Spannungsquelle 21 einstellbar. Hierdurch lassen sich Fahrzeuge unterschiedlicher Größe simulieren.

Der Empfänger 4 wandelt jeden detektierten Laserimpuls in ein elektronisches Eingangssignal um. Der Empfänger 4 ist elektronisch mit einem Verzögerungsgenerator 10 verbunden. Dieser weist im vorliegenden Beispiel einen Abschnitt 11 mit einer festen Verzögerung auf und einen seriell dahinter angeordneten Abschnitt 12 mit einer programmierbaren Verzögerung auf. Somit wird das elektronische Eingangssignal zunächst um eine festgelegte Zeitspanne im Abschnitt 11 mit einer festen Verzögerung verzögert. Im Anschluss daran wird das bereits verzögerte Eingangssignal um eine programmierbare Zeitspanne, also um eine variable Zeitspanne, verzögert. Das hier zweifach verzögerte Eingangssignal verlässt den Verzögerungsgenerator 10 als Ausgangssignal zum Ansteuern des Senders 5, der durch das Ausgangssignal gesteuert einen Laserimpuls zurück in Richtung zum Prüfling aussendet.

Grundsätzlich ist auch denkbar, dass der Verzögerungsgenerator 10 nur einen Abschnitt entweder mit einer festen oder einer programmierbaren Verzögerung aufweist.

Der Abschnitt 12 mit einer programmierbaren Verzögerung wird durch eine Steuereinheit 13, z.B. in Form eines Computers, programmiert. Die Steuereinheit 13 greift hierbei auf einen Speicher 20 zu, in dem Zeitabläufe gespeichert sind. Die Zeitabläufe simulieren die Bewegung eines Fahrzeugs, einschließlich eventueller Messfehler und Abdeckungen eine Fahrzeugs, wie sie im realen Ablauf vorkommen können.

Somit sendet der Prüfling 2, wie bei einer realen Messung eines Fahrzeugs, Laserimpulse aus, die von der Prüfvorrichtung 1 verzögert werden. Zeitlich verzögert sendet die Prüfvorrichtung 1 Laserimpulse zurück, so dass der Prüfling 2 anhand der Zeitdifferenz zwischen einem gesendeten Laserimpuls und dem als Antwort zeitverzögert von der Prüfvorrichtung zurückgesandten Laserimpuls ein Abstand ermittelt wird. Auf Basis mehrerer aufeinanderfolgender Abstandsmessungen ermittelt der Prüfling 2 eine Geschwindigkeit des simulierten Ziels, die z.B. auf einer Anzeige 14 ausgegeben werden kann.

Zur Kalibrierung der Prüfvorrichtung 1 ist eine Kalibriereinrichtung 15, hier in Form eines digitalen Speicheroszilloskops, vorgesehen. Aus dem Lichtweg zwischen dem Messkopf 6 des Prüflings 2 und dem Messkopf 3 der Prüfvorrichtung 1, genauer zwischen dem Diffusor 7 und dem Empfänger 4, ist ein erstes optisches Auskoppelelement 16 vorgesehen. Dieses leitet bzw. lenkt, vorzugsweise transmittiert, einen Teil des vom Prüfling 2 ausgesandten Laserimpulses in Richtung zum Empfänger 4 und leitet bzw. lenkt, vorzugsweise reflektiert, einen weiteren Teil des vom Prüfling 2 ausgesandten Laserimpulses in Richtung zu einem ersten Kalibrierempfänger 17.

Aus dem Lichtweg zwischen dem Messkopf 3 der Prüfvorrichtung 1 und dem Messkopf 6 des Prüflings 2, genauer zwischen dem Sender 5 der Prüfvorrichtung 1 und dem Diffusor 7, ist ein zweites optisches Auskoppelelement 18 vorgesehen. Dieses leitet bzw. lenkt, vorzugsweise transmittiert, einen Teil des vom Sender 5 ausgesandten Laserimpulses in Richtung zum Prüfling 2 und leitet bzw. lenkt, vorzugsweise reflektiert, einen weiteren Teil zu einem zweiten Kalibrierempfänger 19.

Die beiden Kalibrierempfänger 17, 19 können baugleich zu dem Empfänger 4 der Prüfvorrichtung 1 ausgestaltet sein. Die Kalibrierempfänger 17, 19 detektieren die Laserimpulse und wandeln diese in elektronische Signale um, wobei anhand der zeitlichen Differenz zwischen dem Detektieren des Laserimpulse im ersten Kalibrierempfänger 17 und dem Detektieren des Laserimpulses im zweiten Kalibrierempfänger 19 die simulierte Entfernung, und bei mehreren aufeinanderfolgenden Laserimpulsen auch die simulierte Geschwindigkeit, ermittelt werden kann.

### Bezugszeichenliste

- 1: Prüfvorrichtung
- 2: Prüfling
- 3: Messkopf der Prüfvorrichtung
- 4: Empfänger / Fotodiode
- 5: Sender / Laserdiode
- 6: Messkopf des Prüflings
- 7: Diffusor / Streuscheibe
- 8: Computer
- 9: Messebene
- 10: Verzögerungsgenerator
- 11: Abschnitt mit einer festen Verzögerung
- 12: Abschnitt mit einer festen Verzögerung
- 13: Steuereinheit
- 14: Anzeige
- 15: Kalibriereinrichtung / digitales Speichoszilloskop
- 16: erstes optisches Auskoppelelement
- 17: erster Kalibrierempfänger
- 18: zweites optisches Auskoppelelement
- 19: zweiter Kalibrierempfänger
- 20: Speicher
- 21: regelbare Spannungsquelle

## Patentansprüche

1. Prüfvorrichtung (1) zum Testen eines optischen Abstands- und Geschwindigkeitsmessers (LiDAR), welche folgendes aufweist:
einen Empfänger (4), der dazu bestimmt ist, von einem Prüfling (2) ausgestrahlte Lichtimpulse zu detektieren und diese in die Lichtimpulse repräsentierende elektronische Eingangssignale umzuwandeln,
einen mit dem Empfänger (4) verbundenen Verzögerungsgenerator (10), der dazu bestimmt ist, zu den Eingangssignalen zeitverzögerte elektronische Ausgangssignale zu generieren, sowie
einen mit dem Verzögerungsgenerator (10) verbundenen und mittels der Ausgangssignale gesteuerten Sender (5), der dazu bestimmt ist, Lichtimpulse in Richtung des Prüflings (2) auszusenden,
**dadurch gekennzeichnet,**
**dass** vor dem Empfänger (4) ein erstes optisches Auskopplungselement (16) zum Auskoppeln eines Teils des Lichtimpulses von dem Prüfling (2) zu einer Kalibriereinrichtung (15) vorgesehen ist und
**dass** vor dem Sender (5) ein zweites optisches Auskopplungselement (18) zum Auskoppeln eines Teils des Lichtimpulses von dem Sender (5) zu der Kalibriereinrichtung (15) vorgesehen ist.

2. Prüfvorrichtung nach Anspruch 1,
**dadurch gekennzeichnet,**
**dass** die Kalibriereinrichtung (15) einen ersten Kalibrierempfänger (17) zum Detektieren des ausgekoppelten Lichtimpulses vom Prüfling (2) aufweist und dass die Kalibriereinrichtung (15) einen zweiten Kalibrierempfänger (19) zum Detektieren des ausgekoppelten Lichtimpulses vom Sender (5) aufweist.

3. Prüfvorrichtung nach einem der vorangehenden Ansprüche,
**dadurch gekennzeichnet,**
**dass** die Kalibriereinrichtung (15) ein Oszilloskop ist.

4. Prüfvorrichtung nach einem der vorangehenden Ansprüche,
**dadurch gekennzeichnet,**
**dass** vor dem Empfänger (4) und/oder vor dem Sender (5) ein optischer Diffusor (7) vorgesehen ist.

5. Prüfvorrichtung nach einem der vorangehenden Ansprüche,
**dadurch gekennzeichnet,**
**dass** der Sender (5) eine Laserquelle, insbesondere eine Laserdiode, aufweist.

6. Prüfvorrichtung nach einem der vorangehenden Ansprüche,
**dadurch gekennzeichnet,**
**dass** der Empfänger (4) eine Fotodiode aufweist.

7. Prüfvorrichtung nach einem der vorangehenden Ansprüche,
**dadurch gekennzeichnet,**
**dass** die Empfindlichkeit des Empfängers (4) einstellbar ist, insbesondere hierzu eine Fotodiode aufweist, an der eine regelbare Spannungsquelle (20) vorgesehen ist.

8. Prüfanordnung, die folgendes aufweist:
eine Prüfvorrichtung (1) nach einem der vorangehenden Ansprüche,
einen Prüfling (2) sowie
ein Gestell zur Aufnahme der Prüfvorrichtung (1) und des Prüflings (2),
wobei der Lichtweg zwischen dem Prüfling (2) und der Prüfvorrichtung (1) frei von optischen Elementen ist.

9. Prüfanordnung nach Anspruch 8,
**dadurch gekennzeichnet,**
**dass** die Prüfvorrichtung (1) und der Prüfling (2) jeweils einen Messkopf (3, 6) aufweisen, die baugleiche Sender (5) und Empfänger (4) aufweisen.

10. Prüfanordnung nach einem der Ansprüche 8 oder 9,
**dadurch gekennzeichnet,**
**dass** der Prüfling (2) einen scannenden Messkopf (6) aufweist.

11. Prüfanordnung nach einem der Ansprüche 8 bis 10,
**dadurch gekennzeichnet,**
**dass** der Abstand zwischen dem Messkopf (6) des Prüflings (2) und dem Messkopf (3) der Prüfvorrichtung (1) 0,4 bis 2,0 m beträgt.

12. Verfahren zum Testen eines optischen Abstands- und Geschwindigkeitsmessers (LiDAR) mit den folgenden Verfahrensschritten:
Detektieren von Lichtimpulsen, die von einem Prüfling (2) ausgestrahlt werden,
mittels eines Empfängers (4) einer Prüfvorrichtung (1),
Generieren von die Lichtimpulse repräsentierenden elektronischen Eingangssignalen,
Generieren von zeitlich zu den Eingangssignalen verzögerten elektronischen Ausgangssignalen mittels eines mit dem Empfänger (4) verbundenen Verzögerungsgenerators (10), und
Aussenden von Lichtimpulsen in Richtung zum Prüfling (2) mittels eines mit dem Verzögerungsgenerator (10) verbundenen und mittels der Ausgangssignale gesteuerten Senders (5),
**dadurch gekennzeichnet,**
**dass** die Verzögerungen aufeinanderfolgender Ausgangssignale unabhängig voneinander einstellbar sind.

13. Verfahren nach Anspruch 12,
**dadurch gekennzeichnet,**
**dass** die Verzögerung aufeinanderfolgender Ausgangssignale derart gesteuert wird, dass die Verzögerung stetig kleiner oder stetig größer wird.

14. Verfahren nach einem der Ansprüche 12 oder 13,
**dadurch gekennzeichnet,**
**dass** aus dem Lichtweg zwischen dem Prüfling (2) und der Prüfvorrichtung (1) ein Teil des Lichtimpulses vom Prüfling (2) optisch ausgekoppelt wird und zu einer Kalibriereinrichtung (15) gelenkt wird und
**dass** aus dem Lichtweg zwischen der Prüfvorrichtung (1) und dem Prüfling (2) ein Teil des Lichtimpulses vom Sender (5) der Prüfvorrichtung (1) optisch ausgekoppelt wird und zu der Kalibriereinrichtung (15) gelenkt wird.
